# FASCICULE DE BREVET EUROPEEN

(11) **EP 2 057 721 B1**
(45) Date de publication et mention de la délivrance du brevet: **17.02.2010**
(21) Numéro de dépôt: 07803029.3
(22) Date de dépôt: 29.08.2007
(51) Int. Cl.: H01S 3/092, H01S 3/16, H01S 3/17

(54) **DISPOSITIF D'AMPLIFICATION COMPORTANT UN MILIEU AMPLIFICATEUR LASER DE FORME PARALLELEPIPEDIQUE ET DES MOYENS DE POMPAGE COMPORTANT DES LAMPES**
VERSTÄRKUNGSEINRICHTUNG MIT EINER LASERVERSTÄRKERUMGEBUNG IN PARALLELEPIPEDEN-FORM UND PUMPENMITTEL MIT LAMPEN
AMPLIFICATION DEVICE COMPRISING A LASER AMPLIFIER ENVIRONMENT IN PARALLELEPIPED SHAPE AND PUMPING MEANS COMPRISING LAMPS

(30) Priorité: 30.08.2006 FR 0607623
(43) Date de publication de la demande: 13.05.2009
(73) Titulaire: Thales, 92200 Neuilly Sur Seine (FR)
(72) Inventeur: BRANLY, Stéphane, 91150 Brieres-les-Scelles (FR)
(74) Mandataire: Esselin, Sophie
(86) Numéro de dépôt international: PCT/EP2007/059014
(87) Numéro de publication internationale: WO 2008/025807

(56) Documents cités:
- WO-A-95/31843
- YAGI ET AL: "Nd<3+>:Y3Al5O12 laser ceramics: Flashlamp pumped laser operation with a UV cut filter" Journal of Alloys and Compounds Elsevier Switzerland, vol. 421, no. 1-2, 15 décembre 2005 (2005-12-15), - 14 septembre 2006 (2006-09-14) pages 195-199, XP002435773 available online 15 december 2005 ISSN: 0925-8388
- QITAO LU ET AL: "THE INFLUENCE OF ULTRA-VIOLET CUT-OFF FILTERS ON THE PERFORMANCE OF A 300 W CR:ND:GGG SLAB LASER" OPTICS AND LASER TECHNOLOGY, ELSEVIER SCIENCE PUBLISHERS BV., AMSTERDAM, NL, vol. 24, no. 5, 1 octobre 1992 (1992-10-01), pages 267-271, XP000320270 ISSN: 0030-3992
- BARNES ET AL: "Solid-state laser technology" 1973 IEEE/OSA CONFERENCE ON LASER ENGINEERING AND APPLICATIONS 30 MAY-1 JUNE 1973 WASHINGTON, DC, USA, vol. QE-10, no. 2, février 1974 (1974-02), pages 195-201, XP002435774 IEEE Journal of Quantum Electronics USA ISSN: 0018-9197
- HITZ BRECK: "Ceramic Nd:YAG Laser Generates 144 W" PHOTONICS RESEARCH, [Online] 1 juin 2006 (2006-06-01), XP002435775 Extrait de l'Internet: URL:http:/www.photonics.com//content/spect ra/2006/june/research/82886.aspx> [extrait le 2007-05-23]

## Description

Le domaine de l'invention est celui des dispositifs d'amplification laser par un milieu amplificateur de forme parallélépipédique et s'applique notamment à des lasers nanosecondes, picosecondes voire femtosecondes pompés par lampes.

Dans le domaine des dispositifs d'amplification laser à milieu solide, il existait, jusqu'à un passé récent, deux grands types de matériaux amplificateurs:
- d'une part, les matériaux monocristallins, par exemple le Grenat d'Yttrium et d'Aluminium, encore appelé YAG, le saphir ou le rubis. Ces matériaux sont généralement dopés aux ions de terres rares par exemple ou encore au Titane ou au Chrome.
- d'autre part, les matrices amorphes, telles que le verre phosphate par exemple ou le verre silicate. Ces matrices sont principalement dopées aux ions de terres rares.

De manière générale, les dispositifs d'amplification avec un milieu amplificateur monocristallin, de type matrice YAG par exemple, permettent d'atteindre des taux de répétition élevés mais à des énergies modestes par faisceau. Cette limitation en énergie est due à la section limitée des milieux amplificateurs monocristallins, limitation fixée par la cristallogenèse. Par exemple, la difficulté de faire croître le YAG monocristallin dopé au néodyme, noté Nd:YAG, sur de larges sections et la limitation de son seuil de dommage permettent au mieux d'obtenir des énergies de l'ordre de 4 à 5 Joules pour une section de 2 cm², en régime pulsé avec une durée d'impulsion laser de quelques nanoseconde.
Par ailleurs, les dispositifs d'amplification comportant un milieu amplificateur de type verre permettent d'atteindre des énergies élevées, d'une dizaine de Joules à plusieurs kiloJoules par faisceau, mais à des cadences respectives allant du Hertz à moins d'un tir laser par heure. Les fortes énergies sont permises grâce aux fortes sections possibles d'un tel milieu amplificateur. Il n'y a aucune limitation de la section pour les matrices en verre contrairement aux monocristaux. Par contre, les matrices en verre, du fait de leurs mauvaises propriétés thermo-mécaniques, empêchent la montée en cadence des lasers et obligent, parfois, à mettre en oeuvre, notamment, des moyens complexes de compensation de distorsion de front d'onde.

Concernant les principales techniques de pompage optique des milieux amplificateurs solides, il existe le pompage par lampe continue ou par lampe flash d'une part et le pompage par diode laser continue ou pulsée d'autre part.
Les caractéristiques principales de chacune de ces techniques de pompage optique sont les suivantes:
- Les lampes continues émettent un spectre multi-raies se superposant à un continuum assez faible.
- Les lampes flashes émettent un spectre constitué essentiellement d'un continuum auquel se superposent des raies spectrales de faible intensité La position spectrale des raies d'émission dépend du/des gaz utilisé(s) dans la lampe.
- Les diodes lasers émettent selon une seule raie spectrale qui dépend du semi-conducteur utilisé.

Lorsqu'un matériau laser est pompé par l'une de ces techniques, il devient amplificateur pour une ou plusieurs longueurs d'ondes caractéristiques.

Chacune de ces deux techniques de pompage présente des avantages et des inconvénients, dont les principaux sont les suivants :
- Quand un matériau laser est pompé par lampe, seule une petite partie du spectre d'émission de la lampe est utile au pompage, l'autre partie étant partiellement dissipée thermiquement dans le milieu laser. Cette charge thermique, si elle devient trop élevée, peut induire des distorsions du front d'onde et/ou de la biréfringence limitant les applications possibles du laser.
- La durée de vie des lampes continues et des lampes flashes est souvent bien plus faible que, respectivement, celle des diodes continues et des diodes pulsées. Cela se traduit par une fréquence plus élevée des opérations de maintenance sur les lasers pompés par lampe.
- A performances égales, le prix des amplificateurs pompés par lampes est beaucoup plus faible que celui des amplificateurs pompés par diodes.
- Pour un certain nombre de matériaux lasers, il existe des diodes de pompe émettant selon une longueur d'onde en coïncidence avec une de leurs raies d'absorption. De ce fait la charge thermique déposée dans le milieu amplificateur est réduite et les effets néfastes induits (distorsion du front d'onde, biréfringence induite...) sont réduits. Ainsi avec un pompage continu il est possible d'obtenir une plus forte puissance moyenne en sortie du laser s'il est pompé par diode plutôt que par lampes. Et avec un pompage pulsé, on obtient les mêmes énergies en sortie de laser quel que soit le type de pompe (lampe flash ou diode) mais on peut atteindre des taux de répétition plus élevés avec le pompage par diode.
- Le coût des diodes est beaucoup plus élevé que celui des lampes et de ce fait le coût du maintien en conditions opérationnelles peut être supérieur à celui d'un laser pompé par lampes.

Ainsi, notamment, dans le domaine des lasers pulsés, il est possible aujourd'hui de fabriquer :
- des amplificateurs lasers solides délivrant de fortes énergies, du type des matériaux lasers à base de verre, mais à des taux de répétitions très faibles du fait des effets thermiques s'ils sont pompés par lampes flashes.
- des amplificateurs lasers solides délivrant de fortes énergies, du type des matériaux lasers à base de verre, mais à des taux de répétitions faibles du fait des effets thermiques et à des coûts très élevés s'ils sont pompés par diodes.
- des amplificateurs lasers solides pompés par lampes flash fonctionnant à des taux de répétitions intermédiaires, de l'ordre de 10 à 100 Hz, grâce à l'utilisation de certains matériaux lasers monocristallins ayant de bonnes propriétés thermo-mécaniques mais délivrant des énergies limitées à quelques Joules du fait de la section limitée des cristaux réalisables par cristallogenèse.
- des amplificateurs lasers solides pompés par diodes, coûteux, fonctionnant à des taux de répétitions élevés, à plus de 50 Hz, grâce à l'utilisation de certains matériaux lasers monocristallins ayant de bonnes propriétés thermo-mécaniques mais délivrant des énergies limitées à quelques Joules du fait de la section limitée des cristaux réalisables par cristallogenèse.

L'apparition de nouveaux matériaux lasers combinant les avantages des matrices en verres, ayant de larges sections disponibles permettant l'obtention de fortes énergies, et ceux des meilleurs matériaux monocristallins, ayant de bonnes propriétés thermo-mécaniques, ouvre de nouvelles perspectives.
Ces nouveaux matériaux lasers sont des structures solides polycristallines encore appelées céramiques lasers.

Il est désormais possible de réaliser des dispositifs amplificateurs lasers délivrant en même temps de fortes énergies à des taux de répétition intermédiaires, dans le cas d'un pompage par lampe flash, ou élevés, dans le cas d'un pompage par diodes.
Le choix de la technique de pompage est alors majoritairement guidé par des considérations de coût d'achat et de coût de maintenance. Pour pomper des volumes de milieux amplificateurs, pouvant atteindre plus de 200 cm³ comparativement à 20 cm³ environ auparavant, le coût d'acquisition d'un dispositif d'amplification pompé par diodes peut être élevé. Le pompage par lampes devient alors une alternative intéressante pour les industriels.

Par exemple, la céramique YAG dopée aux ions de terre rare Nd³⁺, du fait de sa structure poly-cristalline qui permet de réaliser des milieux amplificateurs de grandes dimensions, dont la section dépasse 20cm² avec un monocristal de Nd:YAG, peut être employée pour réaliser des dispositifs d'amplification à fortes énergies. Ces énergies obtenues sont de l'ordre de plusieurs dizaines de Joules, dépassant ainsi les 4 à 5 Joules usuellement obtenus. Les cadences obtenues dépassent largement les 10Hz.

Il existe, cependant, certains problèmes pour pomper les céramiques lasers par lampes. Une partie du spectre d'émission des lampes est située dans l'ultra-violet. Ce rayonnement est dommageable pour les céramiques lasers car il induit un effet de solarisation qui à terme dégrade les propriétés optiques de la céramique laser utilisée comme milieu amplificateur. Par conséquent, dans la conception des dispositifs d'amplification laser utilisant des céramiques lasers, il est nécessaire de mettre en oeuvre des techniques empêchant la dégradation de la céramique laser par le rayonnement ultra-violet des lampes.

Avec ces céramiques lasers, de nouveaux lasers sont envisageables permettant de délivrer des puissances moyennes importantes avec un coût du Watt moyen bien moindre qu'avec les solutions complexes actuellement mises en oeuvre, du type la multiplication du nombre de lasers ou le multiplexage des faisceaux entres autres.

Le dispositif proposé dans l'invention combine l'utilisation de matériaux réalisables en grandes dimensions sous forme de barres parallélépipédiques, par exemple la céramique YAG dopée aux ions de terre rare Nd³⁺, et de moyens permettant de filtrer les rayonnements indésirables.

Un but du dispositif d'amplification, comportant un milieu amplificateur de forme parallélépipédique et des moyens de pompage comportant des lampes émettant dans une gamme de fréquence un premier rayonnement utile à l'amplification et un second rayonnement susceptible de dégrader le milieu amplificateur, est d'intégrer des lampes dans une jaquette absorbant au moins une partie du second rayonnement.

Le principal avantage de ces matériaux amplificateurs, type céramique dopée, aux ions de terres rares par exemple, est que leur fabrication n'impose plus de taille limite de réalisation. Ainsi les milieux amplificateurs peuvent être plus grand et le pompage optique plus important.
L'amplification des faisceaux lasers est alors rendue possible à des énergies de plusieurs dizaines de Joules pour les lasers pulsés et ce, à des cadences dépassant la dizaine de hertz. Pour les lasers continus, l'amplification des faisceaux lasers à des puissances de plusieurs dizaines de kiloWatts est réalisable.

Dans Journal of Alloys and Compounds, vol. 421 2006, pages 195-199 de Hideki et al "Flashlamp pumped laser operation with a UV cut filter", un laser avec un cristal Nd;YAG avec des lampes de pompage est divulgué. Le cristal est enrobé d'un tube filtrant de samarium pour bloquer les rayonnements UV. Dans Optics and Laser Technology, vol. 24 no. 5 1992, pages 267-271 de Q LÜ et al "The influence of ultra violet cut-off filters on the performance of a 300 W Cr:Nd:GGG slab laser ", un laser est divulgué avec un filtre UV placé entre la chambre comprenant des lampes de pompage et la chambre comprenant le cristal laser, refroidi par un fluide.

L'invention est comme dans la revendication 1.

Selon l'invention le dispositif dispose de lampes éclairs intégrées dans la jaquette. Le dispositif comporte , des moyens de refroidissement-du milieu amplificateur, comprenant la circulation d'un fluide de refroidissement, des moyens de refroidissement des lampes, et la jaquette possède des ouvertures de sections différentes les unes des autres de manière à contrôler le débit du fluide de refroidissement à l'intérieur de la jaquette.

Selon une variante de l'invention, le dispositif comporte un milieu amplificateur à base de céramique.
Selon une variante de l'invention, le dispositif comporte un milieu amplificateur en céramique de YAG dopée avec des ions Nd³⁺.
Selon une variante de l'invention, le dispositif comporte un milieu amplificateur en céramique de YAG dopée avec des ions Nd³⁺ co-dopée avec des ions Cr³⁺.
Selon une variante de l'invention, le dispositif de pompage est symétrique suivant le plan formé par le milieu amplificateur.
Selon une variante de l'invention, au moins deux faces opposées du milieu amplificateur, sont inclinées entre elles d'un angle de quelques degrés par rotation autour de l'axe Oy, dans ce cas le milieu amplificateur a une forme quasi-parallélépipédique.
Selon une variante de l'invention, le dispositif comprend une jaquette composée d'un matériau à base de quartz ou de verre dopé aux ions Samarium.
Selon une variante de l'invention, le dispositif comporte une jaquette contenant des lampes émettant un second rayonnement dans l'UV.
Selon une variante de l'invention, le dispositif comporte une jaquette qui absorbe les photons dont le spectre coïncide avec la raie d'émission laser du milieu amplificateur.

Selon une variante de l'invention, le dispositif comporte un filtre UV placé entre la jaquette et le milieu amplificateur.
Selon une variante de l'invention, le dispositif comporte un diffusant optique recouvrant ou entourant la jaquette ayant pour fonction d'uniformiser le pompage du milieu amplificateur.
Selon une variante de l'invention, le dispositif comporte un diffusant composé d'une poudre MgO tassée dans un revêtement ou une céramique non dopée.

D'autres caractéristiques et avantages de l'invention apparaîtront à l'aide de la description qui suit faîte en regard des figures annexées parmi lesquelles :
- la figure 1 représente une vue éclatée en perspective d'un exemple du dispositif d'amplification selon l'invention.
- la figure 2 représente un plan de coupe de la figure 1
- la figure 3 représente une vue complète d'un exemple du dispositif d'amplification intégrant des moyens de refroidissement selon l'invention.

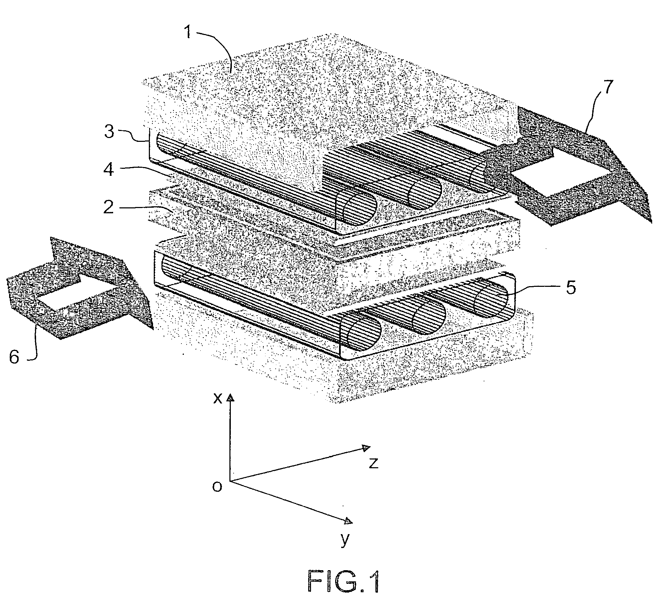

La figure 1 présente un exemple de dispositif d'amplification, dans une vue éclatée en perspective, comportant un milieu amplificateur 2 de forme parallélépipédique en céramique dopé avec un ou plusieurs type(s) d'ions de terre rare ou autres. Ces ions peuvent être typiquement du Néodyme, de l'Ytterbium. La céramique peut être co-dopée avec des ions Cr³⁺. Le milieu amplificateur possède deux grandes faces en regard des lampes de pompage 5. Le pompage se fait perpendiculairement à ces faces. Le faisceau 6 traverse le milieu amplificateur par sa face latérale perpendiculaire à l'axe des lampes et donne lieu à un faisceau amplifié 7 après son passage dans le dispositif.
Les lampes, par exemple des lampes flash 5 sont disposées dans une jaquette 3. Cette jaquette a une triple fonction:
- Cette jaquette, composée d'un matériau quartz/verre dopé aux ions Samarium par exemple, permet d'absorber tout ou une partie des radiations UV émises par les lampes.
- Elle absorbe les photons émis par les lampes dont le spectre est en concordance avec la raie d'émission laser du milieu amplificateur. Cette raie est de 1064nm par exemple pour une céramique YAG dopé avec Nd³⁺. Cette fonction permet d'éviter le dépeuplement du gain laser selon un axe Ox, par émission stimulée par les lampes.
- Elle permet d'assurer une vitesse suffisante du fluide de refroidissement destinée à refroidir les lampes et le milieu amplificateur. Ce fluide permet ainsi d'évacuer une grande partie de la thermique induite par le rayonnement des lampes.

De part et d'autre des grandes faces du milieu amplificateur 2, un filtre UV 4 peut avantageusement être disposé entre la jaquette et le milieu amplificateur. Ce filtre UV a un rôle redondé avec celui de la jaquette. Néanmoins ce filtre est facultatif en fonction de la puissance UV émise par les lampes. Il est représenté comme exemple sur la figure 1.
Le milieu amplificateur dispose de moyens pour réaliser un pompage homogène. Un milieu diffusant optique 1, dit diffuseur, est employé pour uniformiser le pompage du milieu amplificateur. Le rayonnement reçu par le milieu amplificateur étant la somme du rayonnement direct émis par les lampes et du rayonnement réfléchi par le diffuseur. L'objectif du diffuseur est de diffuser le rayonnement utile dans le milieu amplificateur le plus uniformément possible, donc entre les lampes. La géométrie du diffusant optique est adaptée pour uniformiser le rayonnement reçu par le milieu amplificateur. Par exemple, chaque lampe peut être au foyer d'une parabole constituée par le diffusant optique.
De plus, la symétrie du dispositif permet d'assurer également un pompage homogène dans le milieu amplificateur. Le faisceau laser incident 6 rentre dans le milieu amplificateur par la face formée du plan Oxy. D'une part, l'axe de propagation du faisceau laser Oz étant perpendiculaire à l'axe des lampes Oy, et d'autre part du fait de la symétrie du dispositif suivant le plan Oyz, le pompage est symétrique dans le milieu amplificateur suivant le plan Oyz. Le pompage est donc très homogène selon dans le plan Oyz.
D'autre part la symétrie du dispositif présente un autre avantage. Elle permet d'éviter toute torsion du milieu amplificateur.

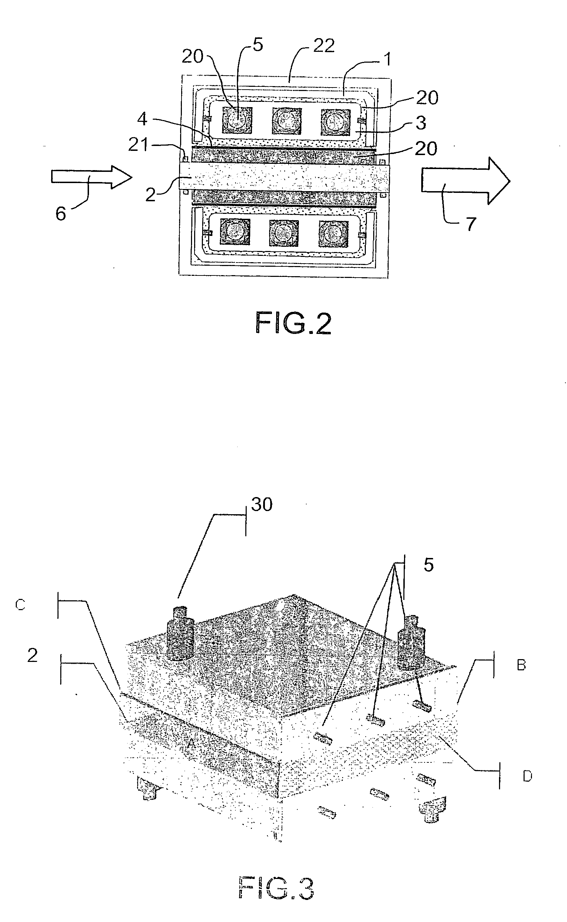

La figure 2 représente une coupe dans le plan Oxz du dispositif de la figure 1. Le puissant rayonnement émis par les lampes a l'inconvénient de chauffer le milieu amplificateur et de dégrader ses propriété optiques. Pour cela un double dispositif de refroidissement est mis en place dans la structure. Un fluide de refroidissement 20 est introduit de part et d'autre du milieu amplificateur 2 et circule le long de ses faces de plus grandes surfaces (plan Oyz de la figure 1). Il permet ainsi de contrôler une partie de la thermique du dispositif de pompage. Un dispositif de refroidissement peut également être intégré à la jaquette 3. Cette dernière possède des ouvertures de sections différentes de manière à contrôler le débit du fluide de refroidissement 20 à l'intérieur de la jaquette. Le fluide de refroidissement circule donc à l'intérieur de la jaquette autour des lampes 5 et autour de celle-ci. Ce dernier dispositif de refroidissement permet d'évacuer la thermique induite par le rayonnement des lampes et limite la thermique du milieu amplificateur.
La jaquette 3 est confinée dans le diffuseur 1. Le diffuseur 1 est constitué d'un réservoir transparent au rayonnement des lampes dans lequel peut être tassée une poudre de MgO par exemple. Eventuellement on peut utiliser une céramique non dopée dans un autre cas de réalisation. Ce milieu ayant pour fonction de diffuser la lumière émise par les lampes, en la réfléchissant, sa forme peut être optimisée et peut varier du cas de réalisation de la figure 2.
Le diffuseur 1, le liquide de refroidissement 20, la jaquette 3 et le filtre UV 4, sont insérés dans une enceinte 22 étanche au fluide de refroidissement. A cet effet, des joints 21 fixent l'enceinte au milieu amplificateur 2. Le dispositif étant symétrique par rapport au plan principal Oyz formé par la plus grande surface médiane du milieu amplificateur, on retrouve de part et d'autre de ce milieu, une enceinte 22 comprenant les éléments décrits ci-dessus.
D'une part, La symétrie du dispositif de pompage présente un intérêt pour le refroidissement homogène et symétrique du milieu amplificateur limitant ainsi la déformation mécanique de ce dernier sous l'effet de la charge thermique. D'autre part, du fait de la symétrie du dispositif de pompage, la biréfringence induite par les contraintes thermo-mécaniques sur le milieu amplificateur apparaît avec des axes optiques selon respectivement Ox et Oy. Ainsi, tout faisceau laser polarisé suivant l'un de ses axes et amplifié dans le milieu amplificateur restera polarisé sur toute la section du faisceau. Ce dispositif a l'avantage, sur les structures de pompages réalisées avec un barreau laser cylindrique, de ne pas introduire d'effets de dépolarisation spatio-dépendante du faisceau amplifié.

La figure 3 représente un exemple de dispositif d'amplification comportant des connecteurs fluides 30 permettant d'injecter et de prélever le fluide de refroidissement. Par le contrôle du débit du fluide il est possible d'ajuster la température du dispositif de pompage. La thermique induite par les lampes est maîtrisée, la durée de vie et les déformations du milieu amplificateur sont rendues conformes aux besoins.
Les faisceaux laser incidents pénètrent le milieu amplificateur par la face A et ressortent amplifiés de la face B. La céramique dopée aux ions (de terre rare par exemple) composant le milieu amplificateur permet de réaliser des surfaces A et B bien supérieures à 2cm², surface maximale réalisable pour un monocristal de YAG par exemple. Les dimensions des milieux amplificateurs peuvent être très grandes du fait du procédé même de la fabrication qui ne relève plus de la cristallogenèse mais plutôt de la fabrication de la céramique. Cette surface n'est plus limitée avec les céramiques lasers (par exemple, céramiques YAG dopées aux ions de terre rare). Les grandes surfaces permettent donc d'amplifier le faisceau à des énergies de plusieurs dizaines de Joules en mode pulsé et plusieurs dizaines de milliers de kilowatt en mode continu.
Les faces latérales C et D du milieu amplificateur sont équipées d'un dispositif permettant d'éviter le phénomène parasite de lasage transverse entre ces faces. Ce dispositif peut être de plusieurs natures : un traitement anti-réfléchissant à la longueur d'onde laser du milieu amplificateur ou un rainurage des faces C et D et/ou un dépolissage des faces ou l'application sur les faces d'un/de matériau(x) absorbant(s). Ce(s) dernier(s) matériau(x) absorbe(nt) à la longueur d'émission laser de la céramique dopée et réalise(nt) une adaptation d'indice optique avec la céramique laser.
Les faces A et B du milieu amplificateur sont équipées d'un dispositif permettant d'éviter le phénomène parasite de pré-lasage entre ces faces. Ce dispositif peut être de plusieurs natures : un traitement anti-réfléchissant à la longueur d'onde laser du milieu amplificateur et/ou l'inclinaison des faces A et B en regard d'un angle de quelques degrés par rotation autour de l'axe Oy: dans ce cas le milieu amplificateur devient quasi-parallélépipédique.
Le nombre de lampes 5, leur disposition et la distance entre elles, sont des paramètres optimisés pour obtenir le dépôt de pompe le plus homogène possible dans le milieu laser. Ainsi, les choix du diffusant optique et de sa forme, couplés à l'ajustement des lampes (nombre, distance, disposition), permettent d'obtenir le gain maximum avec, une répartition homogène du dépôt de pompe dans le milieu amplificateur.

Ainsi il existe plusieurs exemples d'applications, non exhaustives, pouvant bénéficier des performances de ces nouveaux dispositifs amplificateurs de forte puissance moyenne :
- Dans le domaine des lasers femtosecondes, des milieux amplificateurs tels que le Titane-Saphir, noté Ti:Sa, ou des amplificateurs paramétriques d'impulsion à dérive en fréquence, notés OPCPA, peuvent être utilisés. L'objectif à court terme est de pouvoir générer des puissances crêtes de l'ordre du PétaWatt, c'est à dire de l'ordre de 10¹⁵ Watt, à une dizaine de Hertz. Pour cela, les lasers de pompe devront délivrer des énergies de l'ordre de 100 Joules, par impulsion, à 10 Hz dans la bande du spectre visible correspondant au vert. Usuellement 120 milieux amplificateurs pompés par lampes flashes sont nécessaires pour pomper un tel système laser, dit laser PétaWatt, avec les dispositifs incluant des monocristaux de Nd:YAG. Grâce au dispositif selon l'invention, il faudra désormais moins de 25 dispositifs amplificateurs avec des céramiques de Nd:YAG. Les coûts d'acquisition et de maintenance se trouveront fortement allégés, la compacité des chaînes laser sera notablement accrue, le pilotage par logiciel grandement simplifié.
- L'amélioration de la tenue mécanique de la surface de certains métaux par choc laser pourrait être réalisée à l'aide d'un système laser comprenant un amplificateur céramique de Nd:YAG par exemple, capable de délivrer des impulsions de plus de 10 J à des cadences supérieures à 10 Hz. Cette application trouve notamment des débouchés dans l'aéronautique.
- Les applications, telles que le décapage de peinture, par exemple, l'ablation laser, le micro-usinage, le découpage ou la soudure de matériaux, à des vitesses plus élevées qu'actuellement, sont autant d'exemples d'utilisation possibles du dispositif amplificateur selon l'invention.

## Revendications

1. Dispositif d'amplification comportant un milieu amplificateur (2) de forme parallélépipédique, des moyens de refroidissement du milieu amplificateur et des lampes comprenant la circulation d'un fluide de refroidissement (20) et des moyens de pompage comportant des lampes (5) émettant dans une gamme de fréquence un premier rayonnement utile à l'amplification et un second rayonnement susceptible de dégrader le milieu amplificateur, **caractérisé en ce que** des lampes sont intégrées dans une jaquette (3) absorbant au moins une partie du second rayonnement et comportant des ouvertures de sections différentes destinées à la circulation d'un fluide refroidissement (20).

2. Dispositif selon la revendication précédente, **caractérisé en ce que** les lampes sont des lampes flashes.

3. Dispositif selon l'une quelconque des revendications précédentes, **caractérisé en ce que** le milieu amplificateur est à base de céramique laser.

4. Dispositif selon l'une quelconque des revendications précédentes, **caractérisé en ce que** le milieu amplificateur est une céramique de YAG dopée avec des ions Nd³⁺.

5. Dispositif selon la revendication 4, **caractérisé en ce que** le milieu amplificateur est une céramique de YAG co-dopée avec des ions Cr³⁺.

6. Dispositif selon l'une quelconque des revendications précédentes, **caractérisé en ce que** le dispositif est symétrique suivant le plan (Oyz) formé par le milieu amplificateur (2).

7. Dispositif selon l'une quelconque des revendications précédentes, **caractérisé en ce qu'**au moins deux faces opposées du milieu amplificateur (2), sont inclinées entre elles d'un angle de quelques degrés par rotation autour due l'axe Oy, dans ce cas le milieu amplificateur a une formé quasi-parallélépipédique.

8. Dispositif selon l'une quelconque des revendications précédentes, **caractérisée en ce que** la jaquette est composée d'un matériau à base de quartz ou de verre dopé aux ions Samarium.

9. Dispositif selon l'une quelconque des revendications précédentes, **caractérisé en ce que** les lampes émettent un second rayonnement dans l'UV.

10. Dispositif selon l'une quelconque des revendications précédentes, **caractérisé en ce que** la jaquette absorbe les photons dont le spectre coïncide avec ta raie d'émission laser du milieu amplificateur.

11. Dispositif selon l'une quelconque des revendications précédentes, **caractérisé en ce qu'**un filtre UV (4) est placé entre la jaquette (3) et le milieu amplificateur (2).

12. Dispositif selon l'une quelconque des revendications précédentes, **caractérisé en ce qu'**un diffusant optique (1) recouvre la jaquette ayant pour fonction d'uniformiser le pompage du milieu amplificateur.

13. Dispositif selon la revendication 12, **caractérisé en ce** le milieu diffusant est une poudre MgO tassée dans un réservoir ou une céramique non dopée.

## Claims

1. Amplification device comprising an amplifying material (2) of parallelepipedic shape, means of cooling the amplifying material and the lamps, including the circulation of a coolant fluid (20), and pumping means comprising lamps (5) emitting a first radiation for amplification and a second radiation tending to damage the amplifying material within a frequency range, **characterised in that** the lamps are housed in a jacket (3) absorbing at least part of the second radiation and comprising openings with different sections designed for the circulation of a coolant fluid (20).

2. Device according to the previous claim, **characterised in that** the lamps are flash lamps.

3. Device according to any one of the previous claims, **characterised in that** the amplifying material is laser ceramic based.

4. Device according to any one of the previous claims, **characterised in that** the amplifying material is a YAG ceramic doped with Nd³⁺ ions.

5. Device according to claim 4, **characterised in that** the amplifying material is a YAG ceramic codoped with Cr³⁺ ions.

6. Device according to any one of the previous claims, **characterised in that** the device is symmetrical along the plane (Oyz) formed by the amplifying material (2).

7. Device according to any one of the previous claims, **characterised in that** at least two opposing surfaces of the amplifying material (2) are inclined relative to each other at an angle of several degrees of rotation around the axis Oy, and in this case the amplifying material is of quasi-parallelepipedic shape.

8. Device according to any one of the previous claims, **characterised in that** the jacket comprises a quartz or glass based material doped with Samarium ions.

9. Device according to any one of the previous claims, **characterised in that** the lamps emit a second UV radiation.

10. Device according to any one of the previous claims, **characterised in that** the jacket absorbs the photons, the spectrum of which coincides with the laser emission radiation of the amplifying material.

11. Device according to any one of the previous claims, **characterised in that** a UV filter (4) is placed between the jacket (3) and the amplifying material (2).

12. Device according to any one of the previous claims, **characterised in that** an optical diffusing material (1) having the function of making the pumping of the amplifying material uniform covers the jacket.

13. Device according to claim 12, **characterised in that** the diffusing material is an MgO powder packed in a reservoir or a non-doped ceramic.

## Patentansprüche

1. Verstärkungsvorrichtung, die Folgendes umfasst: ein parallelepipedförmiges Verstärkungsmaterial (2), Mittel zum Kühlen des Verstärkungsmaterials und der Lampen, das das Zirkulieren eines Kühlfluids (20) beinhaltet, und Pumpmittel, die Lampen (5) umfassen, die in einem Frequenzbereich eine erste Strahlung zum Verstärken und eine zweite Strahlung emittieren, die dazu neigt, das Verstärkungsmaterial zu schädigen, **dadurch gekennzeichnet, dass** die Lampen in einen Mantel (3) integriert sind, der wenigstens einen Teil der zweiten Strahlung absorbiert und Öffnungen mit unterschiedlichen Sektionen aufweist, die für die Zirkulation eines Kühlfluids (20) ausgelegt sind.

2. Vorrichtung nach dem vorherigen Anspruch, **dadurch gekennzeichnet, dass** die Lampen Blitzlampen sind.

3. Vorrichtung nach einem der vorherigen Ansprüche, **dadurch gekennzeichnet, dass** das Verstärkungsmaterial auf Laserkeramik basiert.

4. Vorrichtung nach einem der vorherigen Ansprüche, **dadurch gekennzeichnet, dass** das Verstärkungsmaterial eine mit Nd³⁺ Ionen dotierte YAG-Keramik ist.

5. Vorrichtung nach Anspruch 4, **dadurch gekennzeichnet, dass** das Verstärkungsmaterial eine mit Cr³⁺ Ionen kodotierte YAG-Keramik ist.

6. Vorrichtung nach einem der vorherigen Ansprüche, **dadurch gekennzeichnet, dass** die Vorrichtung in der von dem Verstärkungsmaterial (2) gebildeten Ebene (Oyz) symmetrisch ist.

7. Vorrichtung nach einem der vorherigen Ansprüche, **dadurch gekennzeichnet, dass** wenigstens zwei einander gegenüber liegende Flächen des Verstärkungsmaterials (2) in einem Winkel von mehreren Rotationsgraden um die Achse Oy zueinander geneigt sind, und in diesem Fall ist das Verstärkungsmaterial quasi parallelepipedförmig.

8. Vorrichtung nach einem der vorherigen Ansprüche, **dadurch gekennzeichnet, dass** der Mantel aus einem mit Samariumionen dotierten Material auf Quarz- oder Glasbasis gebildet ist.

9. Vorrichtung nach einem der vorherigen Ansprüche, **dadurch gekennzeichnet, dass** die Lampen eine zweite Strahlung im UV-Bereich emittieren.

10. Vorrichtung nach einem der vorherigen Ansprüche, **dadurch gekennzeichnet, dass** der Mantel die Photonen absorbiert, deren Spektrum mit dem Laseremissionsstrahl des Verstärkungsmaterials übereinstimmt.

11. Vorrichtung nach einem der vorherigen Ansprüche, **dadurch gekennzeichnet, dass** ein UV-Filter (4) zwischen dem Mantel (3) und dem Verstärkungsmaterial (2) platziert ist.

12. Vorrichtung nach einem der vorherigen Ansprüche, **dadurch gekennzeichnet, dass** ein Lichtdiffusionsmaterial (1) mit der Funktion, das Pumpen des Verstärkungsmaterials zu vereinheitlichen, den Mantel bedeckt.

13. Vorrichtung nach Anspruch 12, **dadurch gekennzeichnet, dass** das Diffusionsmaterial ein MgO-Pulver ist, das in ein Reservoir oder eine nicht dotierte Keramik gepackt ist.
